# EUROPEAN PATENT APPLICATION

(11) **EP 4 376 363 A1**
(43) Date of publication of application: **29.05.2024**
(21) Application number: 22465568.8
(22) Date of filing: 22.11.2022
(51) Int. Cl.: H04L 12/40, H04L 12/46

(54) **A METHOD AND AN ARRANGEMENT FOR TRANSPORTING IP PACKETS OVER SPI**

(71) Applicant: Continental Automotive Technologies GmbH, 30175 Hannover (DE)
(72) Inventor: Rus, Bogdan Claudiu, 60488 Frankfurt am Main (DE)
(74) Representative: Continental Corporation

(57) **Abstract**

A method and an arrangement for bidirectionally transporting ethernet frames with IP packets over SPI is provided. A first virtual ethernet driver is arranged for receiving ethernet frames comprising encapsulated IP packets an ethernet interface and for sending of the ethernet frames to a first SPI driver. The first SPI driver is arranged for transferring the ethernet frames from the first SPI interface over the SPI connection in SPI frames to the second SPI interface without changing the ethernet frames, wherein a SPI frame size is an ethernet MTU plus an SPI header. The second SPI driver is arranged for receiving the ethernet frames from the second SPO interface and for sending of the ethernet frames to the second virtual ethernet driver, which is arranged for pushing the ethernet frames to the TCP/IP layer for decapsulation.

## Description

### BACKGROUND

A synchronous serial communication interface (SPI) bus is typically used with a very thin software layer on top, that provides little functionality. To overcome this, many frameworks have been designed to add functionality like framing, custom application headers or even things like custom flow control, custom error handling. However, these frameworks, being custom made, are not portable or reusable to other projects. These vary from lightweight to convoluted ones that cover more layers in OSI model (Open Systems Interconnection model).

When SPI is used in a complex project, complexity of the project translates in complexity of the networking layer. Features like flow control, traffic prioritization, forwarding traffic from one network over SPI, complex error handling, QoS become mandatory especially in use cases with combining non-real-time with real-time, high performance with low performance CPU/MCUs. Redesigning a complete, complex communication stack is usually time consuming, error prone and very costly.

Mixing an ethernet infrastructure with an SPI physical layer yields a very good compromise of low-cost low-level SPI infrastructure (datagram, no reliability, no flow control, no prioritization) with complex Ethernet and IP stacks. Therefore, there is a need for a cost-effective integration of IP stack over SPI physical layer, in a peer-to-peer communication. The objective of the invention is to provide a method and an IP adapter for transporting IP packets over SPI.

### SUMMARY

The objective of the invention is met by method according to claim 1 and an arrangement according to claim 8.

According to a first aspect, a method for bidirectionally transporting ethernet frames with IP packets over SPI is provided, the method comprising of the steps of:
- providing a first and second peer device, the first peer device having an ethernet interface and a first SPI-interface and the second peer device having a second SPI interface,
   wherein the first SPI interface and the second SPI interface are connected via an SPI connection;
   wherein the first peer device comprises a first virtual ethernet driver and a first SPI driver and the second peer device comprises a second virtual ethernet driver and a second SPI driver,
   in a first transport direction:
      - receiving, by the first virtual ethernet driver, of ethernet frames comprising encapsulated IP packets over the ethernet interface;
      - analyzing, by the first virtual ethernet driver, of an IEEE 802.1q VLAN header of the ethernet frames and, when VLAN ID or connection ID in the header of the ethernet frames corresponds to a predetermined ID, sending of the ethernet frames to the first SPI driver,
      - transferring, by the first SPI driver, of the ethernet frames from the first SPI interface over the SPI connection in SPI frames to the second SPI interface without changing the ethernet frames, wherein a SPI frame size is an ethernet MTU plus an SPI header,
      - receiving, by the second SPI driver, of the ethernet frames from the second SPI interface and sending of the ethernet frames to the second virtual ethernet driver, and,
      - pushing, by the second virtual ethernet driver, of the ethernet frames to the TCP/IP layer for decapsulation;
   in a second transport direction:
      - receiving, by the second virtual ethernet driver, of ethernet frames comprising encapsulated IP packets and sending of the ethernet frames to the second SPI driver;
      - transferring, by the second SPI driver, of the ethernet frames from the second SPI interface over the SPI connection in SPI frames to the first SPI interface without changing the ethernet frames, wherein a SPI frame size is an ethernet MTU plus an SPI header
      - receiving, by the first SPI driver, of the ethernet frames from the first SPI interface and sending the ethernet frames to the first virtual ethernet driver, and,
      - transferring, by the first virtual ethernet driver, of the ethernet frames over the ethernet interface.

The first and second peer devices are two entities in a communication network, that are connected to each other over an SPI connection. The first peer device is also connected to another entity in a communication network. Each peer may be a microcontroller unit (MCU) or a central processing unit (CPU). In one or more embodiments, each peer may be part of an ECU (electronic control unit) of a vehicle.

According to the invention only ethernet frames that have a predetermined ID header (being VLAN ID or connection ID) will be transported from the first to the second peer. An advantage of this may that it may increase the data security in the network, e.g. it would be harder to attack one of the peer devices.

According to the invention, the ethernet frames are transported over the SPI connection without changing the ethernet frames. Since the ethernet frames are not changed, the requirements for processing power are limited.

In one or more embodiments, the first and second virtual ethernet driver each comprise adaptation code arranged for exposing a virtual ethernet device to a networking stack of operating systems on the first and second peer device, based on the SPI connection. An advantage of this embodiment may be that the SPI layer remains hidden for the higher OSI layers.

In one or more embodiments, the method comprises the step of switching, by the first virtual ethernet driver, of a specific VLAN ID or connection-ID in order to provide a network interface card to the second peer device.

In one or more embodiments, the adaptation code in the first peer is arranged for (i) receiving SYN packets generated by an API using an ARP table, (ii) preparing the ethernet frames and/or (iii) sending the ethernet frames over the SPI connection.

In one or more embodiments, the adaptation code in the second peer is arranged for (i) receiving the ethernet frames, (ii) for validating the CRC, (iii) adding source/destination MAC addresses and/or (iv) pushing the frames to the TCP/IP for decapsulation.

In one or more embodiments, a single mac address is shared between the first and second peer device, such that the first and second device are exposed together as a single device to other entities in the network connected to the first peer device using the ethernet interface.

In one or more embodiments, each of the first and second peer device may comprise a microcontroller unit (MCU) or a central processing unit (CPU) and are optionally part of an ECU (electronic control unit) of a vehicle.

In one or more embodiments, a source and a destination ethernet MAC (Media Access Control) address are hardcoded in the driver of the ethernet interface. In that case the MAC addresses need not to be transported over the SPI connection.

In one or more embodiments, a MII (Media-Independent Interface) status register structure is flagged as fully up and indicates full duplex with speed closest to said SPI connection.

An advantage of this method is that it provides for reliability, flow control, and connection management for streaming data. Furthermore, it may provide an efficient use of memory and an integration with existing operating systems and frameworks.

According to second aspect an arrangement for bidirectionally transporting ethernet frames with IP packets over SPI is provided, where the arrangement comprises:
- a first peer device having an ethernet interface and a first SPI-interface, wherein the first peer device comprises a first virtual ethernet driver and a first SPI driver.
- a second peer device having a second SPI interface, wherein the second peer device comprises a second virtual ethernet driver and a second SPI driver, wherein the first SPI interface and the second SPI interface are connected via an SPI connection;
wherein
- the first virtual ethernet driver is arranged for receiving ethernet frames comprising encapsulated IP packets over the ethernet interface and for analyzing of an IEEE 802.1q VLAN header of the ethernet frames and, when VLAN ID or connection ID in the header of the ethernet frames corresponds to a predetermined ID, for sending of the ethernet frames to the first SPI driver,
- the first SPI driver is arranged for transferring the ethernet frames from the first SPI interface over the SPI connection in SPI frames to the second SPI interface without changing the ethernet frames, wherein a SPI frame size is an ethernet MTU plus an SPI header,
- the second SPI driver is arranged for receiving the ethernet frames from the second SPI interface and for sending of the ethernet frames to the second virtual ethernet driver,
- the second virtual ethernet driver is arranged for pushing the ethernet frames to the TCP/IP layer for decapsulation,
wherein
- the second virtual ethernet driver is arranged for receiving ethernet frames comprising encapsulated IP packets and for sending of the ethernet frames to the second SPI driver;
- the second SPI driver is arranged for transferring the ethernet frames from the second SPI interface over the SPI connection in SPI frames to the first SPI interface without changing the ethernet frames, wherein a SPI frame size is an ethernet MTU plus an SPI header,
- the first SPI driver is arranged for receiving the ethernet frames from the first SPI interface and sending the ethernet frames to the first virtual ethernet driver,
- the first virtual ethernet driver is arranged for transferring the ethernet frames over the ethernet interface.

In one or more embodiments, said first and second peer device are each one of a group comprising an MCU and a CPU.

According to a third aspect, a vehicle is provided, comprising an arrangement as described in this document. According to a fourth aspect, a computer program comprising instructions which, when the program is executed by a computer, cause the computer to carry out the steps of any embodiment of the method as described in this document. Also, a computer-readable medium is provided having stored thereon said computer program.

The working, advantages and embodiments of the arrangement and the vehicle as well as the working, advantages, and embodiments of the computer program and computer-readable medium, correspond with the working, advantages and embodiments of the method as described in this document, mutatis mutandis.

### BRIEF DESCRIPTION OF THE DRAWINGS

For a more complete understanding of the present invention, reference in the following description is made to the accompanying drawings in which:
Figure 1 shows a schematic overview of an arrangement of a first and second peer device for bidirectionally transporting ethernet frames with IP packets over SPI according to one or more embodiments of the invention;
Figure 2 shows a schematic overview of a method for bidirectionally transporting ethernet frames with IP packets over SPI according to one or more embodiments of the invention; and,
Figure 3 shows a vehicle according to one or more embodiments of the invention.

### DETAILED DESCRIPTION

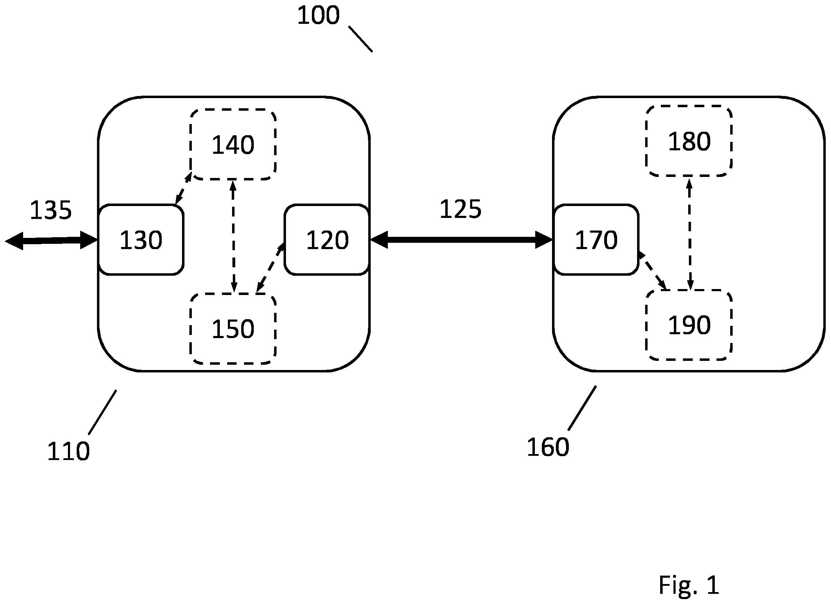

Figure 1 shows a schematic overview of an arrangement 100 of a first peer device 110 and second peer device 120 for bidirectionally transporting ethernet frames with IP packets over SPI according to one or more embodiments of the invention.

First peer device 110 has an ethernet interface 130 and a first SPI-interface 120. Frist peer device 110 further comprises a first virtual ethernet driver 140 and a first SPI driver 150. Second peer device 160 has a second SPI interface 170 and comprises a second virtual ethernet driver 180 and a second SPI driver 190. First SPI interface 120 and second SPI interface 170 are connected via SPI connection 125. Ethernet interface 130 is connected with external devices or network entities via ethernet connection 135.

In one or more embodiments, a source and a destination ethernet MAC address are hardcoded in virtual ethernet driver 140. In one or more embodiments, a single mac address is shared between first peer device 110 and second peer device 160, such that first peer device 110 and second peer device 160 are exposed together as a single device to other network entities that are connected to the first peer device 110 via ethernet connection 135.

When ethernet frames are transported from the first peer device 110 to the second peer device 160 the following applies:
First virtual ethernet driver 140 is arranged for receiving ethernet frames comprising encapsulated IP packets over the ethernet interface 130 and for analyzing of an IEEE 802.1q VLAN header of the ethernet frames. When a VLAN ID or connection ID in the header of the ethernet frames corresponds to a predetermined ID, first virtual ethernet driver 140 is arranged for sending of the ethernet frames to the first SPI driver 150.

First SPI driver 150 is arranged for transferring the ethernet frames from first SPI interface 120 over SPI connection 125 in SPI frames to second SPI interface 170 without changing the ethernet frames. In this, a SPI frame size of a SPI frame comprising the ethernet frame is an ethernet MTU plus an SPI header.

Second SPI driver 190 is arranged for receiving the ethernet frames from the second SPI interface 170 and for sending the ethernet frames to the second virtual ethernet driver 180. Second virtual ethernet driver 180 is arranged for pushing the ethernet frames to a TCP/IP layer for decapsulation. The decapsulated IP packets may be processed by applications run on the second peer device 160.

When ethernet frames are transported from the second peer device 160 to the first peer device 110 the following applies:
Second virtual ethernet driver 180 is arranged for receiving ethernet frames comprising encapsulated IP packets from the TCP/IP layer and for sending of the ethernet frames to the second SPI driver 190.

Second SPI driver 190 is arranged for transferring the ethernet frames from the second SPI interface 170 over SPI connection 125 in SPI frames to first SPI interface 120, again without changing the ethernet frames. The SPI frame size equals again the size of the ethernet MTU plus an SPI header.

First SPI driver 150 is arranged for receiving the ethernet frames from the first SPI interface 120 and for sending the ethernet frames to the first virtual ethernet driver 140. In turn, first virtual ethernet driver 140 is arranged for transferring the ethernet frames over the ethernet interface 130 using ethernet connection 135 to other entities in the network.

In one or more embodiments, the ethernet interface 130 comprises a MII status register structure 133 in which the connection is flagged as fully up and full duplex status is set with a transmission speed closest to said SPI connection. Example of this ethernet speed are 10 Mb/s and 100 Mb/s.

In one or more embodiments, a conversion of ethernet frames and control information into SPI frames in the first peer device 110 is executed by AUTOSAR routines, and a conversion of the received SPI frames into ethernet frames and control information in the second peer device 160 is executed by Linux routines.

In one or more embodiments, first virtual ethernet driver 140 is arranged for replying to power-down and reset requests from other entities that communicate over ethernet connection 135 with the first peer device 110.

In one or more embodiments, first virtual ethernet driver 140 is arranged for switching of a specific VLAN ID or connection-ID in order to provide a network interface card to network device connected to the first peer device 110 over ethernet connection 135.

In one or more embodiments, first peer device 110 comprises adaptation code which enables first peer device 110 for being arranged for (i) receiving SYN packets generated by an API using an ARP table, (ii) preparing the ethernet frames and/or (iii) sending the ethernet frames over the SPI connection.

In one or more embodiments, second peer device 160 comprises adaptation code which enables second peer device 110 for being arranged for (i) receiving the ethernet frames, (ii) for validating the CRC, (iii) adding source/destination MAC addresses and/or (iv) pushing the frames to the TCP/IP for decapsulation.

In one or more embodiments, each of the first and second peer device may comprise a microcontroller unit (MCU) or a central processing unit (CPU) and may optionally be part of an ECU (electronic control unit) of a vehicle.

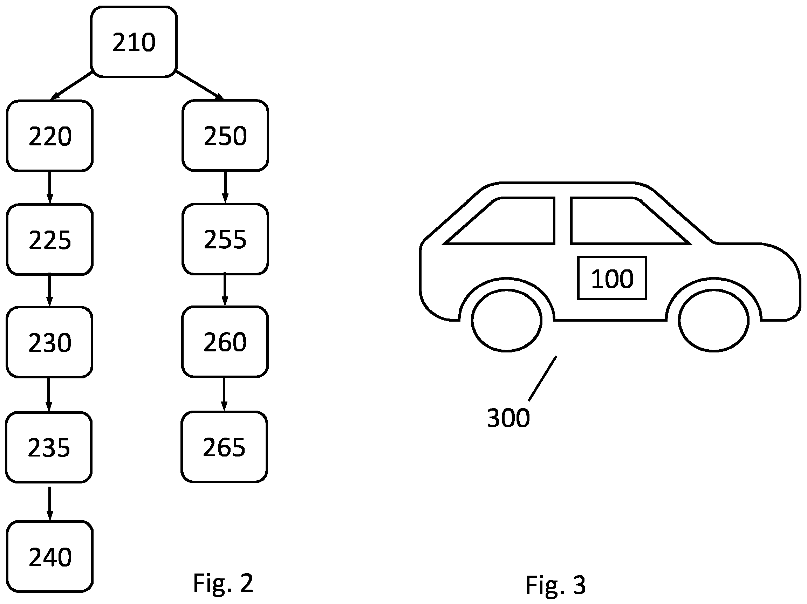

Figure 2 shows a schematic overview of a method for bidirectionally transporting ethernet frames with IP packets over SPI according to one or more embodiments of the invention.

The method 200 of figure 2 comprises the following steps:
Step 210: providing a first and second peer device, the first peer device having an ethernet interface and a first SPI-interface and the second peer device having a second SPI interface,
wherein the first SPI interface and the second SPI interface are connected via an SPI connection;
wherein the first peer device comprises a first virtual ethernet driver and a first SPI driver and the second peer device comprises a second virtual ethernet driver and a second SPI driver,

In a first transport direction from the first peer device 110 to the second peer device 160 the following applies:
Step 220: receiving, by the first virtual ethernet driver, ethernet frames comprising encapsulated IP packets over the ethernet interface;
Step 225: analyzing, by the first virtual ethernet driver, of an IEEE 802.1q VLAN header of the ethernet frames and, when VLAN ID or connection ID in the header of the ethernet frames corresponds to a predetermined ID, sending of the ethernet frames to the first SPI driver,
Step 230: transferring, by the first SPI driver, of the ethernet frames from the first SPI interface over the SPI connection in SPI frames to the second SPI interface without changing the ethernet frames, wherein a SPI frame size is an ethernet MTU plus an SPI header,
Step 235: receiving, by the second SPI driver, of the ethernet frames from the second SPI interface, and sending of the ethernet frames to the second virtual ethernet driver, and,
Step 240: pushing, by the second virtual ethernet driver, of the ethernet frames to the TCP/IP layer for decapsulation.

In a second transport direction from the second peer device 160 to the first peer device 110 the following applies:
Step 250: receiving, by the second virtual ethernet driver, of ethernet frames comprising encapsulated IP packets and sending of the ethernet frames to the second SPI driver;
Step 255: transferring, by the second SPI driver, of the ethernet frames from the second SPI interface over the SPI connection in SPI frames to the first SPI interface without changing the ethernet frames, wherein a SPI frame size is an ethernet MTU plus an SPI header;
Step 260: receiving, by the first SPI driver, of the ethernet frames from the first SPI interface and sending the ethernet frames to the first virtual ethernet driver, and,
Step 265: transferring, by the first virtual ethernet driver, of the ethernet frames over the ethernet interface

Figure 3 shows a vehicle 300 according to one or more embodiments of the invention. Vehicle 300 comprises arrangement 100 with first peer device 120 and second peer device 160 as described in this embodiment.

A computer program may be provided comprising instructions which, when the program is executed by a computer, cause the computer to carry out the steps of one or more embodiments of the method as described in this document. A computer-readable medium may be provided, having stored thereon this computer program.

As will be appreciated by one skilled in the art, aspects of the present invention may be embodied as a system, device, method or computer program product. Accordingly, aspects of the present invention may take the form of an entirely hardware embodiment, an entirely software embodiment (including firmware, resident software, micro-code, etc.) or an embodiment combining software and hardware aspects that may all generally be referred to herein as a "unit", "module", "system", "device" or "element".

Functions or steps described in this document may be implemented as an algorithm executed by a microprocessor of a computer. Furthermore, aspects of the present invention may take the form of a computer program product embodied in one or more computer readable medium(s) having computer readable program code embodied, e.g., stored, thereon.

It is to be understood that the above description is included to illustrate the operation of the preferred embodiments and is not meant to limit the scope of the invention. From the above discussion, many variations will be apparent to one skilled in the art that would yet be encompassed by the scope of the present invention.

## Claims

1. Method for bidirectionally transporting ethernet frames with IP packets over SPI, comprises of the steps of:
- providing a first and second peer device, the first peer device having an ethernet interface and a first SPI-interface and the second peer device having a second SPI interface,
wherein the first SPI interface and the second SPI interface are connected via an SPI connection;
wherein the first peer device comprises a first virtual ethernet driver and a first SPI driver and the second peer device comprises a second virtual ethernet driver and a second SPI driver,
in a first transport direction:
- receiving, by the first virtual ethernet driver, of ethernet frames comprising encapsulated IP packets over the ethernet interface;
- analyzing, by the first virtual ethernet driver, of an IEEE 802.1q VLAN header of the ethernet frames and, when VLAN ID or connection ID in the header of the ethernet frames corresponds to a predetermined ID, sending of the ethernet frames to the first SPI driver,
- transferring, by the first SPI driver, of the ethernet frames from the first SPI interface over the SPI connection in SPI frames to the second SPI interface without changing the ethernet frames, wherein a SPI frame size is an ethernet MTU plus an SPI header
- receiving, by the second SPI driver, of the ethernet frames from the second SPI interface, and sending of the ethernet frames to the second virtual ethernet driver, and,
- pushing, by the second virtual ethernet driver, of the ethernet frames to the TCP/IP layer for decapsulation;
in a second transport direction:
- receiving, by the second virtual ethernet driver, of ethernet frames comprising encapsulated IP packets and sending of the ethernet frames to the second SPI driver;
- transferring, by the second SPI driver, of the ethernet frames from the second SPI interface over the SPI connection in SPI frames to the first SPI interface without changing the ethernet frames, wherein a SPI frame size is an ethernet MTU plus an SPI header
- receiving, by the first SPI driver, of the ethernet frames from the first SPI interface and sending the ethernet frames to the first virtual ethernet driver, and,
- transferring, by the first virtual ethernet driver, of the ethernet frames over the ethernet interface

2. Method according to claim 1, wherein the first and second virtual ethernet driver each comprise adaptation code arranged for exposing a virtual ethernet device to a networking stack of operating systems on the first and second peer device, based on the SPI connection.

3. Method according to claim 1 or 2, further comprising the step of
- switching, by the first virtual ethernet driver, of a specific VLAN ID or connection-ID in order to provide a network interface card to the second peer device.

4. Method according to claim 2, wherein the adaptation code in the first peer is arranged for (i) receiving SYN packets generated by an API using an ARP table, (ii) preparing the ethernet frames and/or (iii) sending the ethernet frames over the SPI connection.

5. Method according to claim 4, wherein the adaptation code in the second peer is arranged for (i) receiving the ethernet frames, (ii) for validating the CRC, (iii) adding source/destination MAC addresses and/or (iv) pushing the frames to the TCP/IP for decapsulation

6. Method according to any of the preceding claims, wherein a single mac address is shared between the first and second peer device and the first and second device are exposed together as a single device.

7. Method according to any of the preceding claims, wherein each of the first and second peer device may comprise a microcontroller unit (MCU) or a central processing unit (CPU) and are optionally part of an ECU (electronic control unit) of a vehicle.

8. An arrangement for bidirectionally transporting ethernet frames with IP packets over SPI, comprising:
- a first peer device having an ethernet interface and a first SPI-interface, wherein the first peer device comprises a first virtual ethernet driver and a first SPI driver.
- a second peer device having a second SPI interface, wherein the second peer device comprises a second virtual ethernet driver and a second SPI driver, wherein the first SPI interface and the second SPI interface are connected via an SPI connection;
wherein
- the first virtual ethernet driver is arranged for receiving, the ethernet frames comprising encapsulated IP packets over the ethernet interface and for analyzing of an IEEE 802.1q VLAN header of the ethernet frames and, when VLAN ID or connection ID in the header of the ethernet frames corresponds to a predetermined ID, for sending of the ethernet frames to the first SPI driver,
- the first SPI driver is arranged for transferring the ethernet frames from the first SPI interface over the SPI connection in SPI frames to the second SPI interface without changing the ethernet frames, wherein a SPI frame size is an ethernet MTU plus an SPI header,
- the second SPI driver is arranged for receiving the ethernet frames from the second SPO interface and for sending of the ethernet frames to the second virtual ethernet driver,
- the second virtual ethernet driver is arranged for pushing the ethernet frames to the TCP/IP layer for decapsulation,
wherein
- the second virtual ethernet driver is arranged for receiving ethernet frames comprising encapsulated IP packets and for sending of the ethernet frames to the second SPI driver;
- the second SPI driver is arranged for transferring the ethernet frames from the second SPI interface over the SPI connection in SPI frames to the first SPI interface without changing the ethernet frames, wherein a SPI frame size is an ethernet MTU plus an SPI header,
- the first SPI driver is arranged for receiving the ethernet frames from the first SPI interface and sending the ethernet frames to the first second virtual ethernet driver,
- the first virtual ethernet driver is arranged for transferring the ethernet frames over the ethernet interface.

9. Arrangement according to claim 8, wherein said first and second peer device are each one of a group comprising an MCU and a CPU.

10. A vehicle comprising an arrangement according to claims 8 or 9.

11. A computer program comprising instructions which, when the program is executed by a computer, cause the computer to carry out the steps of the method of any of claims 1-7.

12. A computer-readable medium having stored thereon the computer program of claim 11.
